# EUROPEAN PATENT SPECIFICATION

(11) **EP 0 445 955 B1**
(45) Date of publication and mention of the grant of the patent: **21.05.1997**
(21) Application number: 91301589.7
(22) Date of filing: 27.02.1991
(51) Int. Cl.: C08L 23/04, C08L 23/20, C08J 5/18

(54) **Polymer blends for packaging films**
Polymermischungen für Verpackungsfilme
Mélanges de polymères pour films d'emballage

(30) Priority: 28.02.1990 US 486565
(43) Date of publication of application: 11.09.1991
(73) Proprietor: SHELL OIL COMPANY, Houston Texas 77002 (US); MITSUI PETROCHEMICAL INDUSTRIES, LTD., Tokyo (JP)
(72) Inventor: Hwo, Charles C., Sugar Land, Texas 77478 (US)
(74) Representative: Cresswell, Thomas Anthony

(56) References cited:
- EP-A- 0 293 074
- EP-A- 0 339 989
- GB-A- 2 074 046
- US-A- 4 189 519

## Description

The present invention relates to a polymer blend for use in producing packaging film, particularly heat sealable wrapping or packaging film which is capable of forming a peelable seal having improved hot tack strength. The blend comprises an ethylene homopolymer or copolymer of ethylene and an unsaturated ester, a copolymer of ethylene and an unsaturated carboxylic acid and a butene-1 homopolymer or copolymer. A seal is achievable either between two films of this kind or between one film of this kind and a rigid container without the need for an adhesive.

A peelable seal is defined to be the seal or joint between two films produced by heat sealing or impulse sealing, the joint thus formed having the property of being able to open in the original plane of joining of the two films by the action of a pulling force, without tearing occurring in the material of the two films used to make up the joint. For the purposes of the present invention, the peelable seal must possess a mechanical resistance sufficient to maintain the wholeness and the tight-seal properties of the packaging and wrapping during storage and transport until such time as the packaging or wrapping is opened. The mechanical resistance of the peelable seal must be low enough to permit ready manual opening of the joint, i.e. without the use of any auxiliary instrument.

Many different thermoplastic materials have been employed in the manufacture of films, some of which are capable of forming peelable seals. For example, US-A-4,189,519 discloses a blend for producing a peelable heat seal comprising (a) 50 to 90 percent by weight of a copolymer of 80 to 96 percent by weight ethylene and 20 to 4 percent by weight of an ethylenically unsaturated ester, and (2) 50 to 10 percent by weight of a crystalline isotactic polybutylene. US-A-3,900,534 discloses thermoplastic shrink films with good heat seal characteristics and good optical properties, but does not address the need for a peel seal film. US-A-3,879,492 discloses blends of polybutylene, styrene-butadiene copolymer, low density polyethylene (LDPE), high density polyethylene (HDPE) and polyisobutylene. US-A-4,539,263 discloses peel seals based on blends comprising propylene/a-olefin copolymer, but does not refer to polybutylenes. EP-A-213698 discloses blends of an ethylenic polymer, a butene-1 polymer and a propylene polymer.

Various other references teach heat sealable films capable of forming peel seals, such as US-A-4,550,141, US-A-4,539,263 and US-A-4,414,053. However, these references do not appear to teach the components of a blend suitable for forming an intimate packaging film structure. There has been a long felt need for a blend to be used as a sealant which has a higher hot tack strength for use in certain applications such as vertical form/fill/seal packaging

The invention recognizes that conventional multilayer peelable seal films or sheets are comprised of substrates and peelable sealants which are generally not chemically compatible and accordingly, the present invention provides a novel blend and film made therefrom to create chemically compatible substrates and peelable sealants. The invention avoids delamination layers when sealed layers are pulled apart.

According to the invention there is provided a blend for use in producing a packaging film consisting essentially of:
(i) from 35 to 85 weight percent of an ethylene homopolymer of a copolymer of ethylene and an unsaturated ester,
(ii) from 10% to 60% by weight of a copolymer of ethylene and an unsaturated carboxylic acid, which is not a graft copolymer and
(iii) from 5 to 55 percent by weight of a butene-1 homopolymer or copolymer which has a melt flow of from 0.1 to 500 when measured by ASTM D 12 36-62 Te, the weight percentages of (i), (ii) and (iii) being based on their combined weight. Preferably the butene-1 homopolymer or copolymer has a melt index of 0.01 to 1000.

The invention also provides a packaging film or sheet which is capable of forming peel seals comprising the blend of the invention. The invention further provides a laminar structure comprising a backing material to which is bonded a packaging film or sheet of the invention. The invention still further provides a peelably sealed rigid package comprising a rigid container having a lid sealed with a film, sheet or laminate of the invention. Films and/or laminates according to the invention are characterized by a nearly constant peel strength over an extended heat seal temperature range.

A laminated film or sheet according to the invention can provide a peel strength of 0.18 to 2.3 kg/2.54 cm (0.4 to 5 pounds per inch) when heat sealing between the film or sheet and a backing material or a rigid container occurs at a temperature of 71°C to 260°C (160 to 500°F) as determined at the sealing jaws.

Component (i) of the blend of the invention can for example be a copolymer of ethylene with vinyl acetate.

The copolymer of ethylene and an unsaturated carboxylic acid used as component (ii) suitably is a copolymer selected from ethylene/acrylic acid copolymer (EAA), ethylene/methacrylic acid copolymer (EMAA), ethylene/ethyl acrylic acid copolymer (EEAA), ethylene/butyl acrylic acid copolymer (EBAA) and ethylene/propyl acrylic acid copolymer (EPAA).

The term "polybutylene" is used herein to denote component (iii) and refers to butene-1 homopolymer and butene-1 copolymers such as butene-1-ethylene copolymer, butene-1-propylene copolymer and copolymers of butene with alpha olefins having from 5 to 8 carbon atoms.

The polybutylene which is a basic component of the blends of this invention suitably is a product of a stereospecific polymerization procedure and is referred to as an "isotactic" or "stereospecific" polymer in that the repeating units of its polymeric chain all possess the same stereochemical configuration along the chain. This is to be contrasted with "atactic" polymers wherein the repeating units of the polymeric chain vary in a random configuration along the chain. The stereochemical nature of isotactic polybutylene for use in the present invention may be readily observed from the following structural depiction thereof:

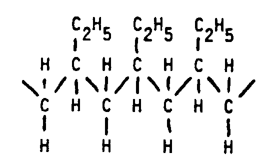

High molecular weight, isotactic polybutylenes utilized in blends of this invention are prepared by the stereospecific polymerization of butene-1 monomer. Methods of conducting such polymerization procedures are well known to those skilled in the art; typical procedures being disclosed in US-A-3,197,452 and in NL-A-6507546. These procedures generally involve the use of polymerization initiators or catalysts for the polymerization of the butene-1 monomer to polymers of high molecular weight. Among the preferably catalytic systems utilized in such procedures are the reaction products of metal alkyl compounds, such as aluminum triethyl, and a heavy metal compound, such as the trihalides of Groups IV-VI metals in the Periodic Table, e.g. titanium, vanadium, chromium, zirconium, molybdenum and tungsten. The formation of polymers exhibiting substantial isotactic properties as well as the variations in the molecular weight thereof will thus depend on the nature of the polymerization catalyst, the nature of the co-reactants in the system and the reaction conditions being utilized.

Suitable isotactic polybutylenes are relatively rigid at normal temperatures but flow readily upon being heated. As noted, they must exhibit a high molecular weight. Thus, expressing molecular weight in terms of "melt flow," the applicable isotactic polybutylenes should exhibit a melt flow of from 0.1 to 500, preferably 0.2 to 300, more preferably from 0.4 to 40.0, still more preferably 0.4 to 7, especially 1 to 4, more especially 2± 0.5. Such melt flow values are determined by the method described in ASTM D 1236-62 Te and are inversely related to molecular weight, i.e. the lower the melt flow value, the higher the molecular weight. In addition, it should be noted that minor amounts, i.e. up to 20 percent by weight, of alpha-olefin comonomers, such as ethylene and propylene, may be present in the butene-1 polymerization system without any substantial loss of the herein-described desirable properties displayed by the resultant butene-1 polymer.

Butene-1 can be copolymerized with a variety of alpha-olefins to provide useful copolymers such as those taught in US-A-3,362,940. The polybutylene employed herein is preferably of a film-forming grade, and can be obtained commercially from the Shell Chemical Company or prepared as described in US-A-3,362,940.

The blends of the invention may be formed into an unoriented or oriented film by a casting or film blowing method. After fabrication the film can be heat sealed by sealing jaws at a preset temperature, pressure, and dwell. The seal strength is tested by an "Instron" (Registered Trade Mark) tensile tester at a crosshead speed of 25.4 cm (10 inches) per minute. Maximum strength on a 2.54 cm (1 inch) width strip was designated as peel seal strength.

These manufacturing techniques apply to film, but the blends of the invention may also be used to provide sheeting. Film refers to shaped plastics that are comparatively thin and have a maximum thickness of 0.254 mm (0.010 inches or 10 mils). Sheeting is a shaped plastic having a thickness greater than 0.254 mm (0.010 inches).

The blend of the present invention may also be used to provide a laminated structure comprising a coating layer or peel seal coat of the blend on a backing material. The peel seal coat can be coated or laminated onto a desired backing material. The backing material can be, for example, selected from poly-4-methyl pentene, nylon, high density polyethylene, aluminum foil, polycarbonate, polystyrene, polyurethane, polyvinyl chloride, polyester, polyacrylonitrile, polypropylene and paper. Except for high density polyethylene, nylon and the aluminum foil, the remaining backing material may require a tie layer adhesive for use with the novel film layer.

The laminated structure can be made by making two separate films that are then laminated. The films may be prefabricated by either film blowing (melt extrusion with a circular die) or the casting method (a flat die or slot die-melt extrusion process). The laminated structure can then be prepared by any suitable means, such as heat lamination or coextrusion. Coextrusion techniques that can be used are described in US-A-2,480,998.

The extrusion process starts with a polymer in a form that can be fed continuously into an extruder by means of a screw or pneumatic tube. Sometimes the polymers are combined with materials such as plasticizers, lubricants, stabilizers, and colorants by means of Banbury mixers. The resulting mix is extruded through rod shaped dies and chipped into pellets. Pelletized polymer is fed into a screw conveyor into the end of a screw-type extruder and is heated and made into viscous fluid in a cylinder by means of a revolving, helical screw. The sheet emitting from the die is quenched on a temperature controlled chill roll. Finished films may be subject to a two-way stretching using continuous tenterframe operations in biaxial orientation.

### EXAMPLE 1

### BLOWN FILM

"DURAFLEX" (Registered Trade Mark) Polybutylene (PB) PB0110, obtainable from Shell Chemical Company, having a melt index of about 0.4 dg/min. (ASTM method D-1238 condition"E") and a density of about 0.9 g/cm³ was dry blended in a tumbler mixer with Dow Primacor 1430 ethylene-acrylic acid copolymer (EAA) and DuPont "Alathon" (Registered Trade Mark) 3159 ethylene-vinyl acetate copolymer (EVA). The resultant blend was coextruded with Hoechst-Celanese 7740 high density polyethylene (HDPE) at a die temperature of about 210°C into a laminate about 0.06 mm (2.5 mils) thick using a flat die. The laminate comprised 0.05 mm (2.0 mils) of HDPE and 0.01 mm and (0.5 mils) of the blend. Hot tack strength was tested. Film samples of each composition 2.54 cm (1 inch) wide and 30 cm (12 inches) long were tested at temperatures between 77°C and 121°C (170°F and 250°F). Hot tack strength was determined using a DTC Hot Tack Tester using 0.28 MPa (40 psi) seal bar pressure, 150 mm/sec peel speed, 0.5 seconds dwell time and 0.3 seconds delay time setting. Hot tack strengths are given for the films in Table 1.

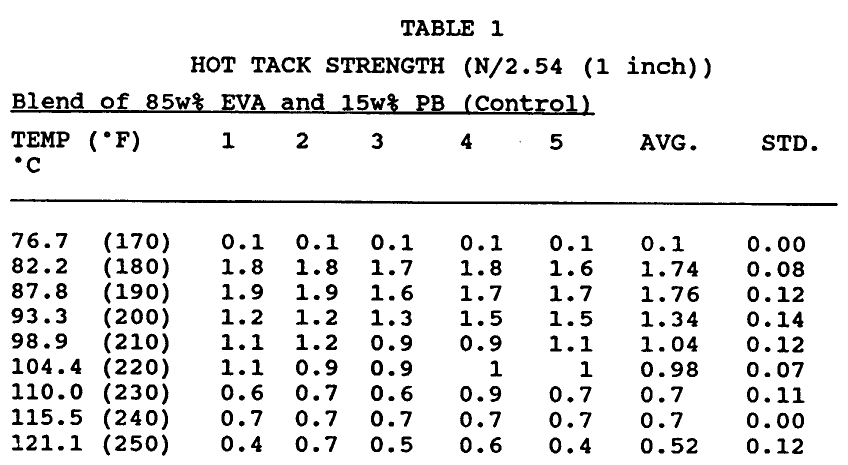

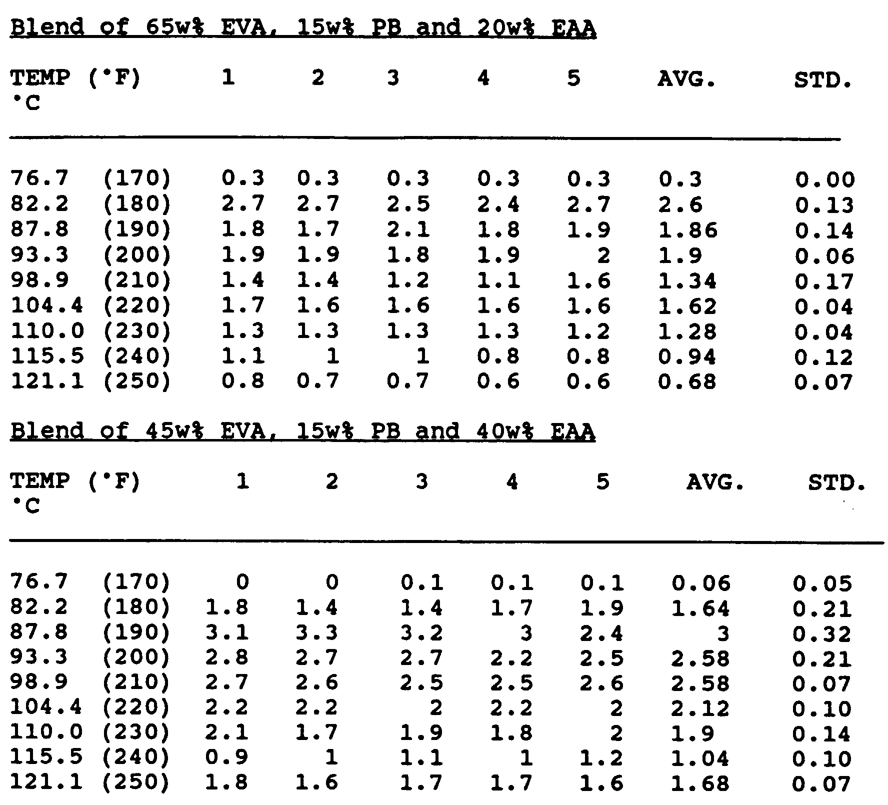

As may be seen from Table 1, when the film was tested for hot tack strength in Newtons per 2.54 cm (1 inch) at sealing temperatures of from 77 to 121°C (170°F to 250°F) it was unexpectedly found that the blend containing an ethylene-carboxylic acid copolymer, in particular EAA, provided a unique film which had a high hot tack strength and good processability (does not adhere to the processing equipment), and which bonded by coextrusion or extrusion lamination to a high density polyethylene substrate in a laminar structure without the need for an adhesive to achieve such bonding. Increases in hot tack strength of 100% or more over the blend without EAA were easily obtainable.

## Claims

1. A blend for use in producing a packaging film consisting essentially of:
(i) from 35 to 85 percent by weight of an ethylene homopolymer or a copolymer of ethylene and an unsaturated ester;
(ii) from 10 to 60 percent by weight of a copolymer of ethylene and an unsaturated carboxylic acid, which is not a graft copolymer; and
(iii) from 5 to 55 percent by weight of a butene-1 homopolymer or copolymer which has a melt flow of from 0.1 to 500 when measured by ASTM D 1236-62 Te, the weight percentages of (i), (ii) and (iii) being based on their combined weight.

2. A blend according to claim 1 wherein (ii) is a copolymer of ethylene and acrylic acid, methacrylic acid, ethyl acrylic acid, butyl acrylic acid or propyl acrylic acid.

3. A packaging film or sheet which is capable of forming peel seals, comprising a blend as claimed in any one of the preceding claims.

4. A laminar structure comprising a backing material to to which is bonded a film or sheet as claimed in claim 3.

5. A laminar structure according to claim 4 wherein said backing material is selected from polypropylene film, aluminum foil, nylon film, polyester film, polycarbonate film, poly-4-methyl pentene-1 film and paper.

6. A peelably sealed rigid package comprising a rigid container having a lid sealed with a film or laminate as claimed in any one of claims 3 to 5.

7. A package according to claim 6 wherein the rigid container is of a material selected from polypropylene, high density polyethylene, polyester, polyamide, polystyrene polyvinyl chloride, polycarbonate, paper or other polyolefin.

## Patentansprüche

1. Gemisch zur Verwendung bei der Herstellung einer Verpackungsfolie, bestehend im wesentlichen aus:
(i) 35 bis 85 Gew.-% eines Ethylenhomopolymers oder eines Copolymers aus Ethylen und einem ungesättigten Ester,
(ii) 10 bis 60 Gew.-% eines Copolymers aus Ethylen und einer ungesättigten Carbonsäure, das kein Pfropfcopolymer ist, und
(iii) 5 bis 55 Gew.-% eines Buten-1-homopolymers oder -copolymers mit einer Fließfähigkeit der Schmelze von 0,1 bis 500, gemessen nach ASTM D 1236-62 Te, wobei sich die Gewichtsprozente von (i), (ii) und (iii) auf ihr Gesamtgewicht beziehen.

2. Gemisch nach Anspruch 1, wobei (ii) ein Copolymer aus Ethylen und Acrylsäure, Methacrylsäure, Ethylacrylsäure, Butylacrylsäure oder Propylacrylsäure ist.

3. Verpackungsfolie oder -bahn, die in der Lage ist, aufziehbare Versiegelungen zu bilden, umfassend ein Gemisch nach einem der vorangehenden Ansprüche.

4. Laminatstruktur, umfassend ein Unterlagenmaterial, auf das eine Folie oder Bahn nach Anspruch 3 gebunden ist.

5. Laminatstruktur nach Anspruch 4, wobei das Unterlagenmaterial ausgewählt ist aus einer Polypropylenfolie, Aluminiumfolie, Nylonfolie, Polyesterfolie, Polycarbonatfolie, Poly-4-methylpenten-1-folie und Papier.

6. Aufziehbar versiegelte, steife Verpackung, umfassend einen steifen Behälter mit einem Deckel, der mit einer Folie oder einem Laminat nach einem der Ansprüche 3 bis 5 versiegelt ist.

7. Verpackung nach Anspruch 6, wobei der steife Behälter aus einem Material besteht, ausgewählt aus Polypropylen, Polyethylen hoher Dichte, Polyester, Polyamid, Polystyrol, Polyvinylchlorid, Polycarbonat, Papier oder einem anderen Polyolefin.

## Revendications

1. Mélange destiné à être utilisé dans la production d'un film d'emballage, comprenant essentiellement :
(i) de 35 à 85 % en poids d'un homopolymère d'éthylène ou d'un copolymère d'éthylène et d'un ester insaturé ;
(ii) de 10 à 60 % en poids d'un copolymère d'éthylène et d'un acide carboxylique insaturé, qui n'est pas un copolymère de greffage ; et
(iii) de 5 à 55 % en poids d'un homopolymère ou copolymère de butène-1, qui présente un indice de fluidité à chaud compris entre 0,1 et 500, quand on le mesure à l'aide de la norme ASTM D 1236-62 Te, les pourcentages pondéraux de (i), de (ii) et de (iii) étant rapportés à leur poids combinés.

2. Mélange conforme à la revendication 1, dans lequel (ii) est un copolymère d'éthylène et d'acide acrylique, d'acide méthacrylique, d'acide éthylacrylique, d'acide butylacrylique ou d'acide propylacrylique.

3. Film ou feuille d'emballage qui est capable de former des scellages pelables, qui comprend un mélange conforme à l'une quelconque des précédentes revendications.

4. Structure stratifiée comprenant un matériau de renforcement auquel est lié un film ou une feuille conforme à la revendication 3.

5. Structure stratifiée conforme à la revendication 4, dans laquelle ledit matériau de renforcement est choisi parmi les film de polypropylène, feuille d'aluminium, film de nylon, film de polyester, film de polycarbonate, film de poly(4-méthylpentène-1) et papier.

6. Emballage rigide à scellage pelable, comprenant un récipient rigide qui présente un opercule scellé avec un film ou un stratifié conforme à l'une quelconque des revendications 3 à 5.

7. Emballage conforme à la revendication 6, dans lequel le récipient rigide est composé d'un matériau choisi parmi les polypropylène, polyéthylène haute densité, polyester, polyamide, polystyrène, poly(chlorure de vinyle), polycarbonate, papier ou autre polyoléfine.
